# EUROPEAN PATENT APPLICATION

(11) **EP 4 647 966 A1**
(43) Date of publication of application: **12.11.2025**
(21) Application number: 25173536.1
(22) Date of filing: 30.04.2025
(51) Int. Cl.: G06N 3/045, G06N 3/096

(54) **USING LARGE GENERATIVE MODELS TO IMPROVE THE PERFORMANCE OF WEAK LANGUAGE MODELS IN PERFORMING COMPLEX TASKS**

(30) Priority: 08.05.2024 US 202418658838
(71) Applicant: Microsoft Technology Licensing, LLC, Redmond, WA 98052-6399 (US)
(72) Inventor: ABOAH BOATENG, Emmanuel, Redmond, 98052-6399 (US); DIBIA, Victor Chukwuma, Redmond, 98052-6399 (US); BECKER, Cassiano Otavio, Redmond, 98052-6399 (US); NOSAKHARE, Ehimwenma, Redmond, 98052-6399 (US); ASGHAR, Nabiha, Redmond, 98052-6399 (US); MCRAE, Chyna Linn, Redmond, 98052-6399 (US); NANDAM, Anusha, Redmond, 98052-6399 (US); JINSI, Omisa, Redmond, 98052-6399 (US); CHEN, Tianwei, Redmond, 98052-6399 (US); CUNILLE BLANDO, Mauricio, Redmond, 98052-6399 (US); SRINIVASAN, Soundararajan, Redmond, 98052-6399 (US); JOSE, Damien S, Redmond, 98052-6399 (US); WALIA, Kabir, Redmond, 98052-6399 (US); SRINIVASAN, Ashwin, Redmond, 98052-6399 (US); AGARWAL, Vipul, Redmond, 98052-6399 (US); SHESHAGIRI RAO, Ananth Rampura, Redmond, 98052-6399 (US)
(74) Representative: CMS Cameron McKenna Nabarro Olswang LLP

(57) **Abstract**

This disclosure describes a model distillation system that implements a framework for improving and enhancing the reliability of weak generative models. For example, the model distillation system uses concept distillation for prompt construction to improve the accuracy of weak generative models while maintaining their efficiency advantage over strong generative models. **In** particular, the model distillation system determines and transfers implicit rich features of a strong generative model to a weak generative model for specific topics and concepts. By using these rich features, the weak generative model can correctly answer queries and prompts for the specific topics and concepts that it would otherwise answer incorrectly. Furthermore, the model distillation system transfers these rich features without needing fine-tuning or retraining, resulting in improved accuracy while still maintaining high levels of efficiency.

## Description

### CROSS-REFERENCE TO RELATED APPLICATIONS

This application claims priority to and the benefit of U.S. Patent Application No. 18/658,838, filed May 8, 2024, which is incorporated herein by reference in its entirety.

### BACKGROUND

In recent years, significant advancements have been made in both hardware and software domains, particularly in the area of artificial intelligence (AI) models, including generative AI. This includes the development of large language models (LLMs) and other large generative models (LGMs). For instance, generative AI models have shown remarkable capabilities in natural language understanding, answer generation, and numerous other applications (e.g., natural language to code translation, chatbots, summarization, and more). Furthermore, generative AI models are continually improving and advancing at a rapid pace.

However, older versions of generative AI models are less accurate and can generate hallucinations, which refer to the generation of inaccurate or irrelevant information in response to a given task. Similarly, newer stabilized versions of generative AI models are more accurate but require significantly more computational resources to train and implement. Additionally, many newer versions have not undergone thorough testing and may also generate hallucinations for topics in which their older versions provided correct answers. Despite the ongoing technological improvements provided by generative AI models, they still suffer from various flaws and shortcomings.

### SUMMARY

This disclosure describes a model distillation system that implements a framework for improving and enhancing the reliability of weak generative models. For example, the model distillation system uses concept distillation for prompt construction to improve the accuracy of weak generative models while maintaining their efficiency advantage over strong generative models. In particular, the model distillation system determines and transfers implicit rich features of a strong generative model to a weak generative model for specific topics and concepts. By using these rich features, the weak generative model can correctly answer queries and prompts for the specific topics and concepts that it would otherwise answer incorrectly. Furthermore, the model distillation system transfers these rich features without needing fine-tuning or retraining, resulting in improved accuracy while still maintaining high levels of efficiency.

### BRIEF DESCRIPTION OF THE DRAWINGS

The following detailed description provides specific and detailed implementations accompanied by drawings. Additionally, each of the figures listed below corresponds to one or more implementations discussed in this disclosure.
FIG. 1 illustrates an example overview of the model distillation system that utilizes large generative models to create a generative text document for a search query.
FIG. 2 illustrates an example computing environment where the model distillation system is implemented.
FIGS. 3A-3B illustrate example sequence and block diagrams for determining vulnerabilities of a weak generative model for a target concept.
FIGS. 4A-4B illustrate example sequence and block diagrams for using a strong generative model to generate induced content to improve the weak generative model when processing prompts for the concept weakness.
FIGS. 5A-5B illustrate example sequence and block diagrams for using the strong generative model and the weak generative model to deduce and verify the induced content for the weak generative model.
FIG. 6 illustrates an example of adapting strong model prompts with distilled concepts to improve versions of strong models.
FIG. 7 illustrates an example series of acts of a computer-implemented method for providing one or more distilled concepts (e.g., verified induced concepts) to one or more weak generative models.
FIG. 8 illustrates example components included within a computer system used to implement the model distillation system.

### DETAILED DESCRIPTION

This disclosure describes a model distillation system that implements a framework for improving and enhancing the reliability of weak generative models. For example, the model distillation system uses concept distillation for prompt construction to improve the accuracy of weak generative models while maintaining their efficiency advantage over strong generative models. In particular, the model distillation system determines and transfers implicit rich features of a strong generative model to a weak generative model for specific topics and concepts. By using these rich features, the weak generative model can correctly answer queries and prompts for the specific topics and concepts that it would otherwise answer incorrectly. Furthermore, the model distillation system transfers these rich features without needing fine-tuning or retraining, resulting in improved accuracy while still maintaining high levels of efficiency.

For context, this document describes implementations and embodiments using the terms weak generative models (weak models) and strong generative models (strong models). Examples of these terms, along with others, are defined below before the figures are described. However, in many instances, weak generative models (e.g., GPT-3 and GPT-3.5-Turbo) are based on large transformer neural networks and use parameters to generate natural language and other types of responses. They are computationally less demanding but may produce less accurate results compared to strong models. Strong generative models (e.g., GPT-4) are larger transformer neural networks that utilize significantly more parameters. They excel in generating more accurate predictions, exhibit better reasoning abilities, and provide more natural-sounding text. However, their computational complexity is significantly higher than that of weak models. Indeed, while a strong generative model regularly yields more accurate results, it does so at significant computational costs and processing time compared to weak generative models.

As mentioned, implementations of the present disclosure provide benefits and solve problems in the art with systems, computer-readable media, and computer-implemented methods that utilize the model distillation system to generate an optimized or supplemented prompt template for a weak generative model based on distilled content generated by strong generative models. Indeed, the model distillation system leverages the strengths of strong generative models to improve the reliability of weak generative models through concept distillation via prompt construction without needing to retrain the weak generative models.

In particular, in various implementations, the model distillation system is provided with a target concept or query that a weak generative model struggles to answer correctly. Upon identifying the target concept or query, the model distillation system generates an initial query prompt from a prompt template and a query for the target concept, provides the initial query prompt to the weak generative model, and receives an incorrect query response to the query. The model distillation system then generates a factual reasoning prompt that includes the incorrect query response, a correct query response to the query, and instructions to provide a reason why the weak generative model generated the incorrect query response, which the model distillation system provides to a strong generative model.

Next, based on receiving a reason response from the strong generative model, the model distillation system generates an induction prompt that includes the factual reasoning prompt, the reason response, and additional instructions to generate induced content for the target concept based on the inputs. The model distillation system then provides the induction prompt to the strong generative model and receives induced content, which may include key concepts, rules, and/or examples for the target concept. Additionally, the model distillation system supplements the prompt template for the weak generative model with distilled content that includes the induced content.

In some implementations, the model distillation system also verifies the induced content before generating the distilled content for the target concept. For example, the model distillation system provides test prompts to the weak generative model based on the query (or a similar query) and the induced content for the target concept to verify that the weak generative model responds correctly. If it does, the model distillation system distills the induced content into the prompt template for the weak generative model. Otherwise, the model distillation system goes back to using the strong generative model to generate additional and/or different induced content for the weak generative model and the target concept.

As described in this disclosure, the model distillation system delivers several significant technical benefits in terms of improved accuracy, efficiency, and flexibility compared to existing generative artificial intelligence (AI) model systems. Moreover, the model distillation system provides several practical applications that address problems related to improving the accuracy and flexibility of weak generative models without reducing the efficiency of these models. Furthermore, in addition to improving weak models, the model distillation system can quickly improve the inaccuracies of newly created strong generative models using the principles, approaches, and actions described in the disclosed implementations.

As briefly mentioned above, existing generative AI model systems suffer from various technical problems, a few of which are highlighted below. For example, some existing systems almost exclusively use stable versions of strong generative models because these models offer the most features, accurate answers, and polished responses. However, these strong models are computationally expensive to train and require large amounts of computational resources to deploy. Additionally, they require a longer time to process, creating latency issues. These latency issues are compounded when a strong model is triggered, executed, or implemented multiple times to answer a query.

As another example, strong generative models can still suffer from hallucinations. In particular, newer, not fully tested versions of strong models may hallucinate when answering concepts that the previous version accurately answers. Indeed, the fast pace of development in this area often results in unpolished (e.g., unstable) versions that may have surprising faults.

On the other hand, weak generative models, including weak generative language models, frequently struggle with complex and high-reasoning tasks. Weak models commonly lack much of the implicit knowledge that strong models have learned. Additionally, weak models commonly suffer from hallucinations due to their shortcomings compared to strong models. Therefore, while weak models are quicker and more efficient than strong models, they are less accurate across a wider range of concepts. Thus, existing systems often must choose between accuracy (e.g., strong models) versus reduced computing costs and demands (e.g., weak models).

By way of example, consider the following prompt provided to a weak model and a strong model. Prompt: "Roger had 5 tennis balls, and he buys 2 more cans of tennis balls. Each can has 3 tennis balls. How many tennis balls does he have now?" The strong model generated a correct answer (e.g., 11 tennis balls), while the weak model incorrectly answered 9 tennis balls. However, the strong model took much longer than the weak model to solve the problem.

In contrast to existing systems, the model distillation system leverages the rich learning and features of a strong generative model to improve and enhance the reasoning and abilities of a weak generative model without having to fine-tune or retrain the weak model. Indeed, the model distillation system solves the technical problem of weak models providing inaccurate results for particular concepts through concept distillation, which also results in improvements to the efficiency, accuracy, and flexibility of computer devices.

To illustrate, by creating supplemental prompt templates that include distilled content (e.g., verified induced content) for target concepts that a weak model struggles to answer, the model distillation system boosts the performance of weak models by implicitly transferring learning weights and biases from more robust strong models to the less advanced weak models. In this way, weak models produce more accurate results while minimizing hallucinations without changing their current architecture and configurations. Indeed, by using induced content and/or distilled content, the model distillation system enhances the reliability and accuracy of weak models without incurring additional efficiency costs.

Additionally, by using supplemented prompt templates, the model distillation system can rapidly address and correct shortcomings of weak models without needing to expend computational resources or lengthy amounts of time to retrain the weak models. Similarly, the model distillation system can also use prompt templates supplemented with distilled content to quickly and efficiently update newly released versions of strong models that include unexpected flaws for particular concepts, which frequently occur in this fast-moving, dynamic technological landscape.

Moreover, using distilled content within a prompt or prompt template also provides added flexibility to computer systems. For example, some weak models are limited in their scope and cannot process a range of concepts. However, for each of these concepts that the weak model struggles to process, the model distillation system may use strong generative models to identify, generate, verify, and distill induced content to provide to the weak models. By incorporating the additional directions and rich features implicitly transferred from the strong model, weak models become able to accurately answer concepts they previously could not, all while operating at efficient, lightweight computational levels. Indeed, the model distillation system enables weak models to accurately and quickly solve a broader range of concepts and applications than before.

To provide another example, researchers performed various tests and measurements comparing a weak generative model (e.g., GPT-3.5-Turbo) and a strong generative model (e.g., GPT-4) across five test sets. The strong model achieved an average accuracy rate of around 95%, while the weak model achieved an average accuracy rate of around 18%. After generating and providing distilled content to the weak model, it achieved an average accuracy rate of around 93%. Notably, the latency time to process the queries was reduced by 50-60% by using the weak model supplemented with the distilled content, as compared to using the strong model (e.g., from over 14 seconds to under 5 seconds).

As illustrated in the preceding discussion, this disclosure uses a variety of terms to describe the features and advantages of one or more described implementations. For instance, this disclosure describes the model distillation system within the context of a cloud computing system.

As an example, a "large generative model" (LGM) is a large artificial intelligence system that utilizes deep learning and a large number of parameters (e.g., in the thousands, millions, billions, or trillions) that are trained on one or more extensive datasets to produce coherent, contextually relevant, and fluently topic-specific outputs (e.g., text and/or images). In many instances, a generative model refers to an advanced computational system that uses natural language processing, machine learning, and/or image processing to generate coherent and contextually relevant human-like responses.

Large generative models have applications in natural language understanding, content generation, text summarization, dialog systems, language translation, creative writing assistance, image generation, audio generation, and more. A single large generative model often performs a wide range of tasks by receiving different inputs, such as prompts (e.g., input instructions, rules, example inputs, example outputs, and/or tasks), data, and/or access to data. In response, the large generative model generates various output formats ranging from one-word answers to long narratives, images and videos, labeled datasets, documents, tables, and presentations.

Moreover, large generative models (LGMs) are primarily based on transformer architectures to understand, generate, and manipulate human language. LGMs can also use other types of architectures such as recurrent neural network (RNN) architecture, long short-term memory (LSTM) model architecture, convolutional neural network (CNN) architecture, or other types of architectures. Examples of LGMs include generative pre-trained transformer (GPT) models such as GPT-3.5 and GPT-4, bidirectional encoder representations from transformers (BERT) model, text-to-text transfer transformer models like T5, conditional transformer language (CTRL) models, and Turing-NLG. Other types of large generative models include sequence-to-sequence models (Seq2Seq), vanilla RNNs, and LSTM networks. In some instances, an LGM includes a large language model (LLM), which serves as a text-based version of an LGM, such as an LGM that receives text prompts and/or generates text outputs. In various implementations, an LGM is a multimodal generative model that receives multiple input formats (e.g., text, images, video, data structures) and/or generates multiple output formats.

In this document, large generative models include weak generative models and strong generative models. As an example, a "strong generative model" (or strong model) refers to a large generative model that includes significantly large number of parameters (e.g., in the billions or trillions). Strong generative models can accurately process prompts across a broad scope of concepts and provide various output types. Strong generative models are computationally expensive and often take tens or dozens of seconds to process requests (e.g., running on currently available hardware). An example of a strong generative model includes GPT-4.

As an example, a "weak generative model" (or weak model) refers to a large generative model that includes fewer parameters (e.g., in the thousands or millions) to generate new data instances. In various implementations, a weak generative model is a lightweight, smaller generative model. For example, a weak generative model is significantly computationally simpler than a strong generative model when processing the same query prompt. In many implementations, weak generative models operate efficiently within resource constraints. In some instances, weak generative models are designed for scenarios where computational resources, memory, or model size are limited. Despite their reduced complexity, weak generative models still exhibit the ability to generate coherent and contextually relevant outputs, albeit on a smaller scale. Some examples of weak generative models include GPT-2.5, GPT-3, GPT-3.5, and GPT-3.5-Turbo.

As an example, the terms "LGM prompt" or "prompt" refer to a request provided to a large generative image model to create a generative LGM output based on a plain language guidance prompt and/or additional input data. In some instances, the model distillation system provides additional information with a prompt (e.g., a system prompt with responsible AI guidelines). A prompt can include higher-level information and meta-level information to provide important contextual information and/or general framing information to an LGM. Examples of prompts include query prompts (from a prompt template), factual reasoning prompts, induction prompts, example query prompts, and others described below.

As another example, the term "prompt template" refers to a file or data structure that includes initial instructions or directions for an LGM. Often, a query and other input data are added to a prompt template to generate a query prompt or another type of prompt to provide to an LGM. A prompt template can be used to provide prompts to generative models or strong generative models, as described below.

As an example, "induced content" refers to data or information about a concept that is generated by a strong generative model to correct errors, hallucinations, mistakes, shortcomings, flaws, or other incorrect responses of a small generative model for a target concept. Induced content can include key concepts, rules, and examples that provide additional guidance to a weak generative model in a prompt for providing in-context learning (ICL) to the weak model. As another example, "distilled content" refers to induced content that has been verified to improve the accuracy, performance, and reliability of a weak generative model for a target concept.

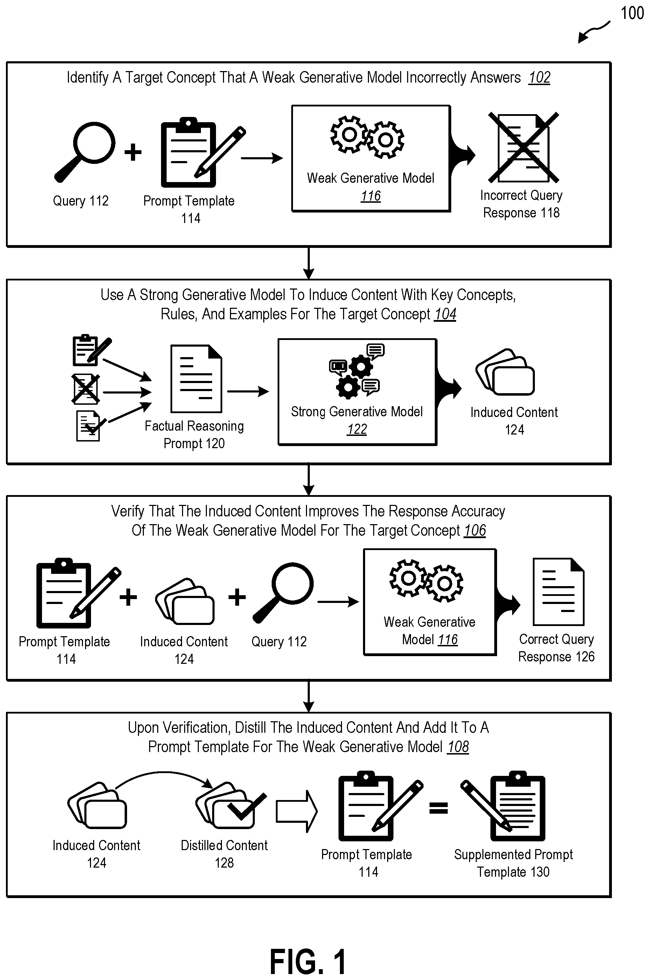

Implementation examples and details of the model distillation system are discussed in connection with the accompanying figures, which are described next. For example, FIG. 1 illustrates an overview of the model distillation system using large generative models to create a generative text document for a search query according to some implementations. While FIG. 1 provides a high-level overview of the invention, additional details are provided in subsequent figures.

FIG. 1 illustrates a series of acts 100 performed by or following directions from the model distillation system. As shown, the series of acts 100 briefly illustrates an example of how the model distillation system utilizes strong generative models to improve the reliability, accuracy, and breadth of weak generative models.

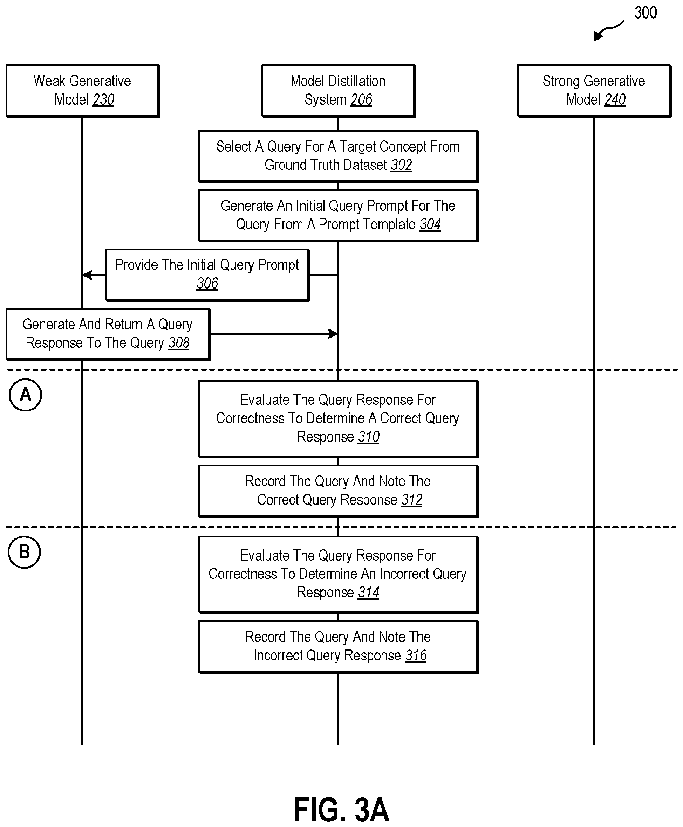

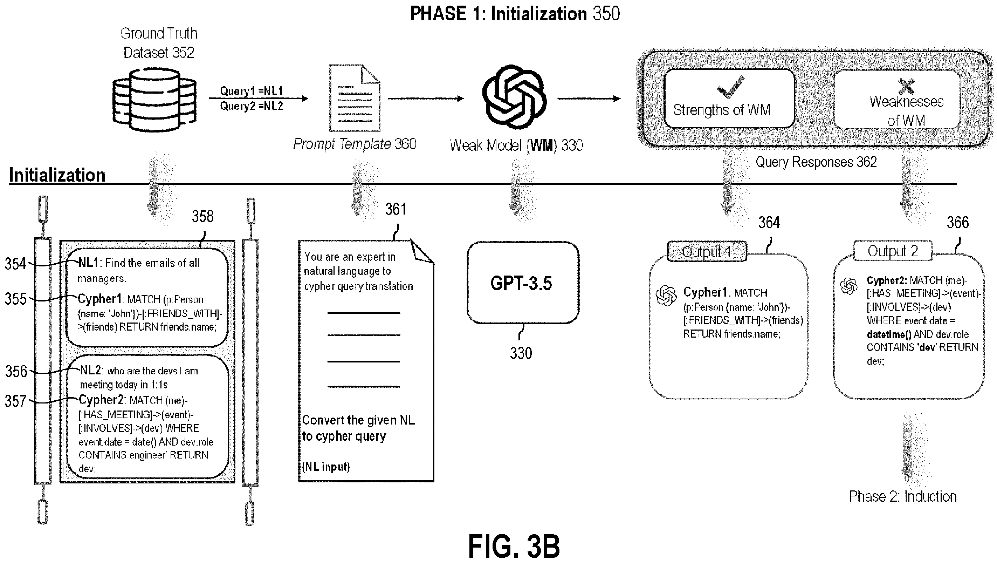

As shown, the series of acts 100 includes act 102 of identifying a target concept that a weak generative model incorrectly answers. For instance, the model distillation system generates an initial query prompt for a target concept by adding a query 112 to a prompt template 114. The model distillation system then provides the initial query prompt to a weak generative model 116, which processes the request and provides a query response. As shown, the model distillation system evaluates the response and determines it to be an incorrect query response 118. In some cases, act 102 is part of an initialization phase. Additional details regarding providing and receiving queries from a weak generative model are provided in connection with FIGS. 3A and 3B.

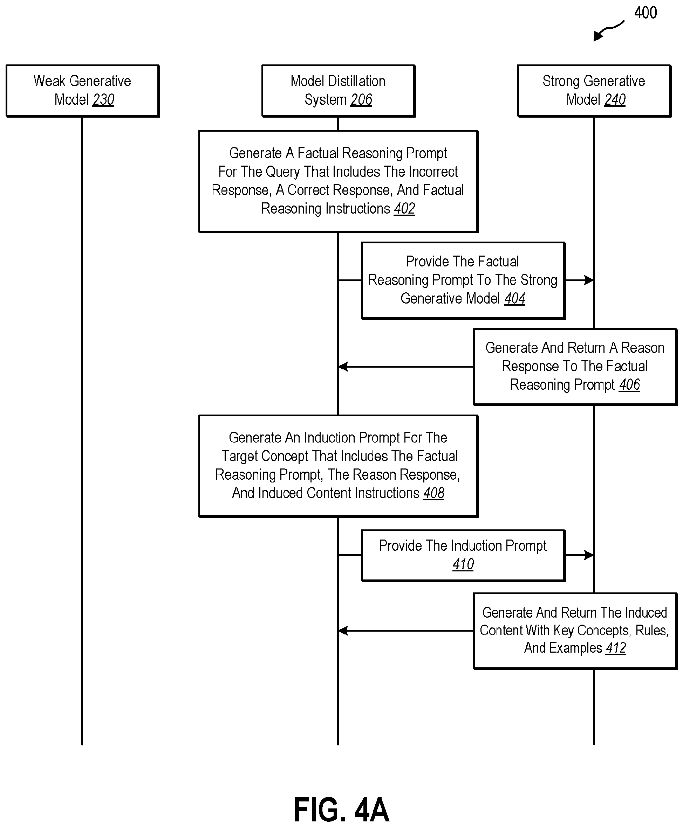

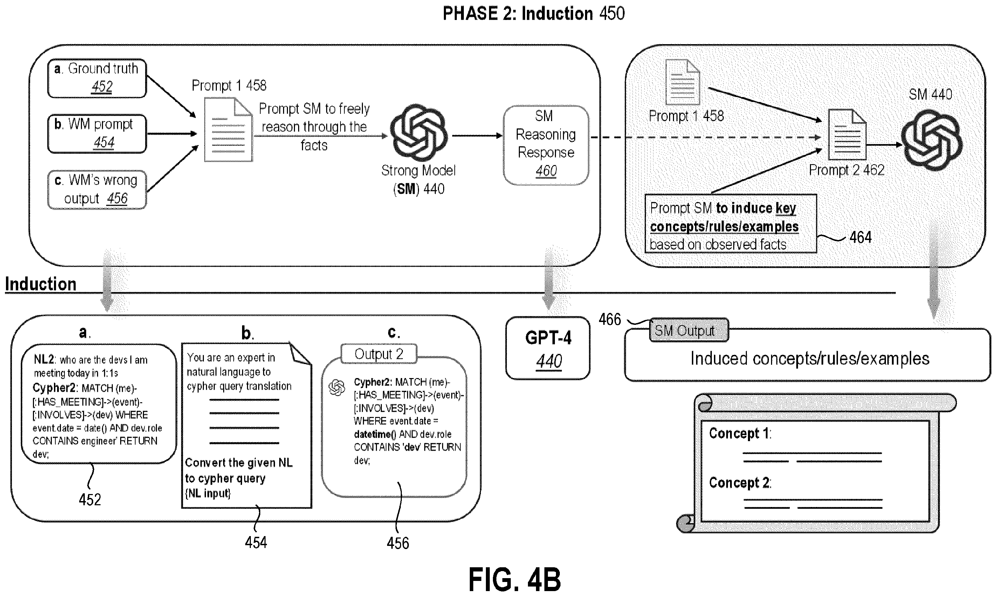

Act 104 includes using a strong generative model to induce content with key concepts, rules, and examples for the target concept. For example, the model distillation system generates a factual reasoning prompt 120 that directs the strong generative model 122 to freely reason and determine why the weak model provided an incorrect response. As part of the factual reasoning prompt 120, the model distillation system may provide the initial query prompt, the incorrect query response 118, and a correct query response. The strong generative model 122 may process the request and return induced content 124. In many cases, the induced content 124 includes key concepts, rules, and examples that the weak model may use to better answer queries for the target concept. In some cases, act 104 is part of an induction phase. Additional details regarding using a strong generative model to generate induced content are provided below in connection with FIGS. 4A and 4B.

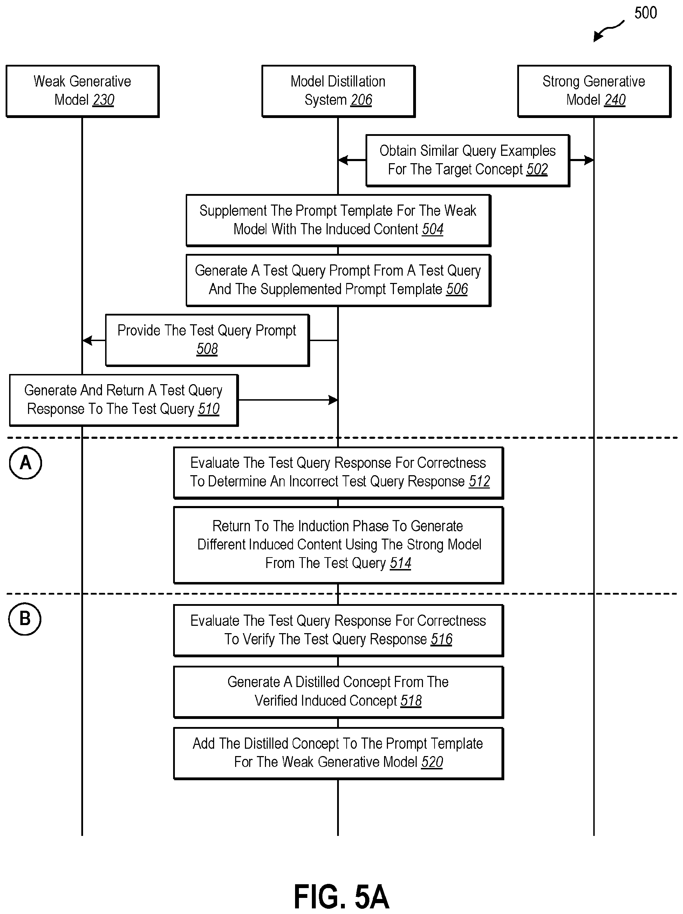

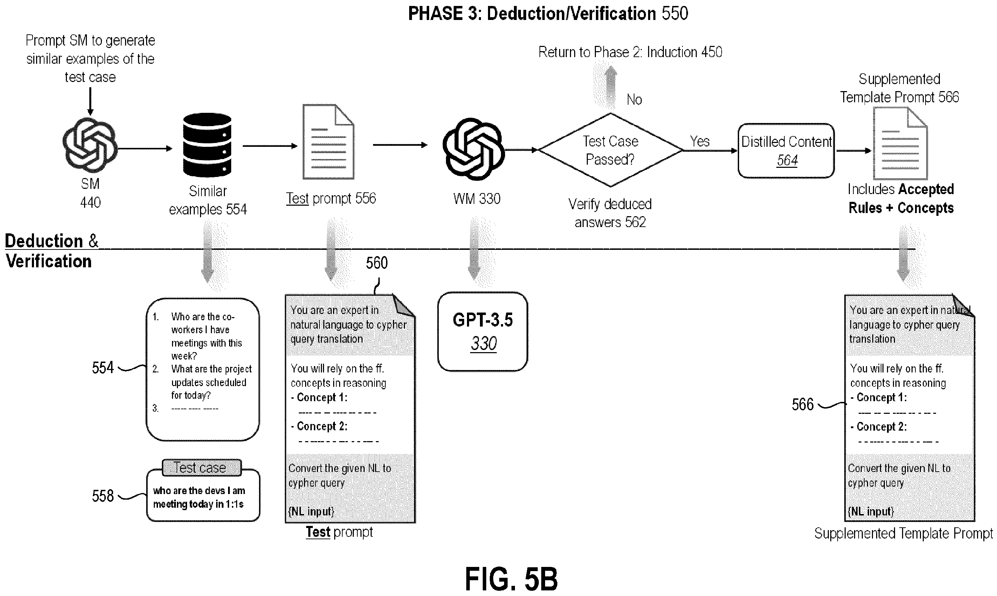

Act 106 includes verifying that the induced concept improves the response accuracy of the weak generative model for the target concept. In various instances, the model distillation system performs one or more test cases to verify or validate the induced content 124. For example, the model distillation system adds the induced content 124 to the prompt template 114, adds the query 112 (or a similar query) to generate a test verification prompt, and then provides the test verification prompt to the weak generative model 116. The weak generative model 116 generates and returns a test verification response, which the model distillation system evaluates to determine if the response is a correct query response 126. In some cases, act 106 is part of a deduction and verification phase. Additional details regarding verifying induced content are provided in connection with FIGS. 5A and 5B.

Act 108 includes distilling the induced content and adding it to a prompt template for the weak generative model upon verification. For instance, upon verifying that the induced content 124 achieves correct results with the weak generative model 116, the model distillation system accepts the induced content 124 as distilled content 128. The model distillation system then adds the distilled content 128 to the prompt template 114 to generate a supplemented prompt template 130 for the weak generative model 116. In this way, future queries for the target concept will be provided to the weak generative model 116 in a prompt that includes the distilled content 128. The weak generative model 116 will use the transferred features provided by the distilled content 128 to accurately, efficiently, and correctly answer these future queries. In some cases, act 102 is referred to as an initialization phase. In some cases, act 108 is part of a deduction and verification phase. Additional details regarding distilled content are provided in connection with FIGS. 5A and 5B.

Indeed, by using concept distillation for prompt construction, in many implementations, the model distillation system strengthens vulnerable areas of weak generative models by transferring implicit features of strong models within a prompt. Additionally, the model distillation system can improve the reliability of weak models by providing distilled concepts without needing to retrain weak models and without changing their architecture or current operational conditions. Furthermore, the model distillation system can use similar techniques of generating and providing distilled concepts and prompts to improve newer versions of strong models that exhibit flaws or weaknesses for target concepts.

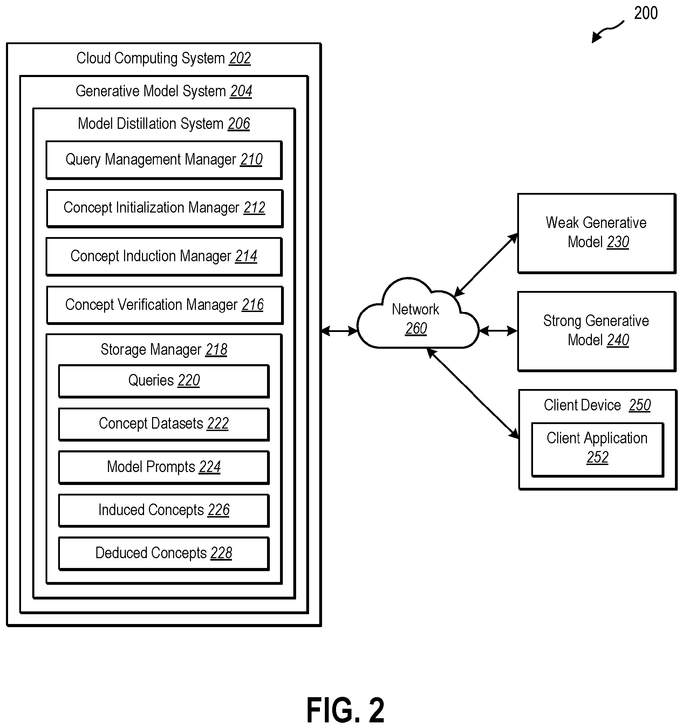

With a general overview in place, additional details are provided regarding the components, features, and elements of the model distillation system. To illustrate, FIG. 2 shows an example computing environment where the model distillation system is implemented according to some implementations. In particular, FIG. 2 illustrates an example of a computing environment 200 of various computing devices including a cloud computing system 202 associated with a model distillation system 206. While FIG. 2 shows example arrangements and configurations of the computing environment 200, the cloud computing system 202, the model distillation system 206, and associated components, other arrangements and configurations are possible.

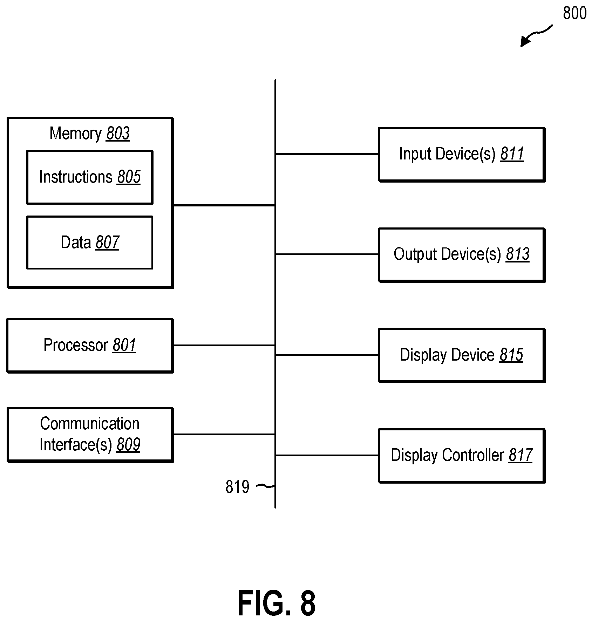

As shown, the computing environment 200 includes a cloud computing system 202 associated with the model distillation system 206, a weak generative model 230, a strong generative model 240, and a client device 250 with a client application 252, connected via a network 260. Many of these components may be implemented on one or more computing devices, such as on one or more server devices. Some of these components may be implemented on a personal device (e.g., the weak generative model 230 is located on a client device). In various implementations, some of these components (e.g., the weak generative model 230, the strong generative model 240, and the client device 250) represent multiple instances or versions (e.g., the weak generative model 230 represents multiple weak models or the strong generative model 240 represents different versions of a strong model). Further details regarding computing devices are provided below in connection with FIG. 8, along with additional details regarding networks, such as the network 260 shown.

Before describing components of the cloud computing system 202 including the model distillation system 206, other components of the computing environment 200 are first discussed to provide better context when discussing the model distillation system 206. As shown, the computing environment 200 includes the weak generative model 230. As provided in the definitions above, weak generative models represent a lighter-weight large generative model (LGM), such as an earlier large language model version (e.g., GPT-3.5). In various implementations, the weak generative model 230 receives prompts and/or other LGM inputs, processes them, and creates generative responses as output. The weak generative model 230 may be located on the cloud computing system 202, the client device 250, or on a separate computing device.

As shown, the computing environment 200 includes the strong generative model 240 (LGM), which creates generative outputs (e.g., LGM outputs) of various types and/or formats, and prompt inputs (e.g., LGM prompts). As provided in the definitions above, strong generative models are larger LGMs that use significantly more parameters and are more computationally demanding than weak generative models. For example, the strong generative model 240 is a multimodal-based model that accurately generates a wider range of concepts than one or more weak generative models.

As shown, the computing environment 200 includes the client device 250. In various implementations, the client device 250 is associated with a user (e.g., a user client device), such as a user who provides queries and prompts to LGMs (e.g., the weak generative model 230 and the strong generative model 240) via the generative model system 204. In various instances, the client device 250 includes a client application 252, such as a web browser, mobile application, or another form of computer application for accessing and/or interacting with the cloud computing system 202 and/or the generative model system 204. For example, the client device 250 interacts with the weak generative model 230 via the generative model system 204 and the model distillation system 206 to quickly receive reliable results, as further described below.

Returning to the cloud computing system 202, as shown, the cloud computing system 202 includes a generative model system 204. In various implementations, the generative model system 204 facilitates queries and prompts to large generative models (LGMs) including the weak generative model 230 and the strong generative model 240. For example, the generative model system 204 receives requests from the client device 250 and determines how to best fulfill the request and whether the request should be sent to any particular model.

As shown, the generative model system 204 implements the model distillation system 206. In some implementations, the model distillation system 206 is located on a separate computing device from the generative model system 204 within the cloud computing system 202 (or apart from the cloud computing system 202). In various implementations, the generative model system 204 operates without the model distillation system 206.

In various implementations, including the illustrated implementation, the model distillation system 206 includes various components and elements that are implemented in hardware and/or software. For example, the model distillation system 206 includes a query management manager 210, a concept initialization manager 212, a concept induction manager 214, a concept verification manager 216, and a storage manager 218. The storage manager 218 includes queries 220, concept datasets 222, LGM prompts 224, induced content 226, and distilled content 228.

In various implementations, the query management manager 210 manages requests and queries 220 provided by the client device 250. For example, the query management manager 210 generates query prompts by combining a query with an appropriate prompt template and providing the query prompt to the weak generative model 230. The weak generative model 230 may provide a correct or incorrect response depending on whether the prompt template has been supplemented with distilled content 228 for a concept corresponding to the query. The query management manager 210 may perform other functions and operations described in this disclosure.

In one or more implementations, the concept initialization manager 212 identifies target concepts where a weak generative model 230 struggles to provide correct responses and obtains examples of incorrect queries with known correct answers. For example, the concept initialization manager 212 accesses and utilizes the concept datasets 222 to obtain a ground truth query pair that includes a query and a corresponding correct answer, and then uses the ground truth query pair to determine whether the weak generative model 230 responds correctly, as further described below.

The concept induction manager 214, in various implementations, generates induced content 226 that includes key concepts, rules, and examples for the target concept to which the weak generative model 230 struggles to respond correctly. In particular, the concept induction manager 214 provides one or more of the LGM prompts 224 to the strong generative model 240 to instruct it to generate induced content 226 in order to improve the weak generative model 230 for the target concept, as further described below.

In one or more implementations, the concept verification manager 216 verifies or validates that the induced content 226 generated by the strong generative model 240 for the target concept causes the weak generative model 230 to answer correctly. Upon verifying the induced content 226, the concept verification manager 216 generates distilled content 228. Furthermore, the concept verification manager 216 may add the distilled content 228 for a target concept to a prompt template for the weak generative model 230 so that the distilled content 228 will be provided to the weak generative model 230 in future query prompts.

Turning to the next set of figures, FIGS. 3A-3B, 4A-4B, and 5A-5B illustrate example sequence and block diagrams that focus on different interactions between the model distillation system 206, the weak generative model 230, and the strong generative model 240 (e.g., via the network 260). In particular, FIGS. 3A-3B describe the model distillation system 206 performing an initialization phase, FIGS. 4A-4B describe the model distillation system 206 performing an induction phase, and FIGS. 5A-5B describe the model distillation system 206 performing a verification and deduction phase.

To begin, FIG. 3A illustrates an example sequence diagram of determining vulnerabilities of a weak generative model for a target concept according to some implementations, while FIG. 3B illustrates a corresponding block diagram that includes corresponding examples. As shown, FIG. 3A includes a series of acts 300 performed by or with the model distillation system 206. In some implementations, the series of acts 300 may include fewer or different acts (e.g., some of the acts may be skipped or omitted). Additionally, in some instances, the acts in the series of acts 300 are performed in a different order.

As shown, the series of acts 300 begins with act 302 of the model distillation system 206 selecting a query for a target concept from a ground truth dataset. For instance, the model distillation system 206 obtains or accesses a ground truth that includes ground truth query pairs of queries and corresponding correct answers. In various implementations, the query pairs are organized by concepts (e.g., topics, subjects, or knowledge areas). For example, the ground truth database includes several query pairs for a target concept. The ground truth database may be generated from a particular weak model or generally created to test and evaluate LGMs.

In various implementations, the model distillation system 206 identifies the target topic based on benchmark tests, other assessments, and/or other reports associated with the weak generative model 230. For instance, a generative model system runs periodic checks on weak models to determine concepts that are too complex or that produce flawed results. The generative model system provides a list of target topics from which the model distillation system 206 selects a target topic.

In these implementations, the model distillation system 206 may generate and obtain a ground truth dataset. For example, the model distillation system 206 utilizes the strong generative model 240 to generate one or more ground truth pairs for the target concept. In some implementations, the model distillation system 206 receives ground truth pairs from another system or from a user via a client device.

Act 304 includes the model distillation system 206 generating an initial query prompt for the query from a prompt template. Based on selecting a query pair, the model distillation system 206 identifies the query and saves the corresponding correct query response for later. The model distillation system then selects a prompt template associated with the weak generative model 230. Upon obtaining the prompt template, the model distillation system 206 generates an initial query prompt that includes the query.

In some implementations, the model distillation system 206 selects a prompt template from a set of prompt templates, for example, based on concepts. In some implementations, the model distillation system 206 uses a prompt template associated with the weak generative model 230. In some implementations, the model distillation system 206 utilizes a default prompt template associated with various weak models.

Act 306 includes the model distillation system 206 providing the initial query prompt to the weak generative model 230. For example, the model distillation system 206 sends the query and any additional instructions and context from the prompt template to the weak generative model 230 as part of the initial query prompt. In particular, the weak generative model 230 generates a query response to the query and returns the query response to the model distillation system 206, as shown in act 308.

As shown in FIG. 3A, the series of acts 300 splits into either Path A or Path B. Path A includes act 310 of the model distillation system 206 evaluating the query response for correctness to determine a correct query response. If the query response is correct (e.g., a correct query response), the model distillation system 206 records the query and notes the correct query response, as shown in act 312 of Path A. By noting which target concepts receive correct responses, the model distillation system 206 can identify model strengths and/or avoid providing induced or distilled content for these concepts to the weak generative model 230.

The model distillation system 206 can evaluate the query response for correctness in various ways. For example, the model distillation system compares the query response to the correct response from the query pair to determine a match. As another example, the model distillation system 206 determines if the query response includes a threshold number or percentage of matching or related keywords included in the correct response. In another example, the model distillation system 206 determines if the query response satisfies or is within a response similarity threshold to the correct response. For instance, the model distillation system 206 converts the text strings to a numerical format (e.g., feature vectors) and determines if the two responses are within a threshold distance of each other. In some implementations, the model distillation system 206 provides the two responses to an LGM with a prompt to evaluate the extent to which the two responses match or if it is a correct response to the query.

Path B includes act 314 of the model distillation system 206 evaluating the query response for correctness to determine an incorrect query response. For instance, the model distillation system 206 determines that the query response received from the weak generative model 230 does not match or correctly answer the query. For example, the model distillation system 206 determines that the query response is beyond a response similarity threshold distance or amount. As another example, if the correct answer is more or less exact (e.g., an engineering solution or an SQL-like query), the model distillation system 206 determines if the query response matches the correct response.

Act 314 in Path B includes the model distillation system 206 recording the query and noting the incorrect query response 316. For example, the model distillation system 206 stores the query, the incorrect query response, and the correct query response. In some instances, the model distillation system 206 associates the incorrect query response with the query pair in the ground truth database along with an indication that the weak generative model 230 struggled to correctly answer the query. Additionally, the model distillation system 206 may use the incorrect query response to improve the weak generative model 230 with distilled content for the weak generative model 230, as described in later figures.

The model distillation system 206 may repeat the series of acts 300 for additional queries from the ground truth database. For example, the model distillation system 206 runs each query associated with a target concept. The model distillation system 206 may group queries together that result in incorrect query responses for further processes, as described below.

In various implementations, the model distillation system 206 omits using the ground truth database. In these instances, the model distillation system 206 may provide a query, such as a current or previous user-submitted query, to the weak generative model 230. In some instances, the model distillation system 206 provides the query and the query response to a strong model with a prompt to determine whether the query response is correct. In some instances, the model distillation system 206 sends the query to the strong model and compares the query response from the weak generative model 230 to the query response from the strong model to evaluate whether the weak generative model 230 responded correctly.

FIG. 3B illustrates an example block timing diagram of determining vulnerabilities of a weak generative model for a target concept according to some implementations. As shown, FIG. 3B shows actions that the model distillation system 206 performs as part of an initialization phase 350. In particular, the example in FIG. 3B corresponds to a weak generative model, such as a chatbot using GPT-3.5, to interpret a user's natural language (NL) query and generate a corresponding response that includes the correct Cypher query syntax (Cypher is a graph query language) to perform the LM query.

FIG. 3B includes the model distillation system 206 obtaining a first query 354 (i.e., Query1=NL1) and a second query 356. (i.e., Query2=NL2) from a ground truth database 352. The two NL queries may be stored as a query pair in the ground truth database 352. For example, the ground truth database 352 includes a first query pair 358 that includes the first query 354 and a first correct response 355. The ground truth database 352 includes a second query pair that includes the second query 356 and a second correct response 357.

As shown in the illustrated example, the initialization phase 350 includes the model distillation system 206 identifying a prompt template 360, which includes instructions and guidelines for the weak model 330. The model distillation system 206 generates initial query prompts 361 (e.g., the prompt template 360 plus the NL input from a query) for the first query and the second query. In particular, the model distillation system 206 generates a first query prompt that combines the first query 354 with the prompt template 360 and a second query prompt that combines the second query 356 with the prompt template 360.

In addition, the model distillation system 206 provides the query prompts to the weak model 330, which is shown as a GPT-3.5 model in this example. The weak model 330 generates query responses 362 for the queries shown as a first output 364 (i.e., Output 1) and a second output 366 (i.e., Output 2).

As described above, the model distillation system 206 evaluates the query responses for correctness and accuracy. In this example, the Cypher query syntax in the output should match exactly to be considered correct. As shown, the first output 364 is a correct response that matches the first correct response 355. However, the second output 366 is an incorrect response because it does not match the second correct response 357. Based on these evaluations, the model distillation system 206 may determine to store the first query 354 as a strength of the weak model 330 and use the second query 356 to improve a discovered (and/or confirmed) weakness of the weak model 330, as indicated by the arrow to use the second output 366 in an induction phase.

As mentioned above, FIGS. 4A-4B are directed to the model distillation system 206 performing an induction phase. In particular, FIG. 4A illustrates an example sequence diagram of using a strong generative model to generate induced content to improve the weak generative model when processing prompts for the concept weakness according to some implementations, while FIG. 4B illustrates another block timing diagram with corresponding examples.

As shown, FIG. 4A includes a series of acts 400 performed by or with the model distillation system 206. In some implementations, the series of acts 400 may include fewer or different acts (e.g., some of the acts may be skipped or omitted). Additionally, in some instances, the acts in the series of acts 400 are performed in a different order.

Act 402 includes the model distillation system 206 generating a factual reasoning prompt for the query that includes the incorrect response, a correct response, and factual reasoning instructions. In many implementations, the factual reasoning prompt includes instructions or directions to the strong generative model 240 to consider the facts provided to the weak generative model 230 and freely reason why the weak generative model 230 answered the query incorrectly. In some cases, the factual reasoning prompt instructs the strong generative model 240 to return a response that lists one or more reasons, justifications, and/or explanations for the incorrect answer.

In addition to the instructions, the factual reasoning prompt includes facts provided to the weak generative model 230, which the strong generative model 240 will use to answer the prompt. These facts can include the initial query prompt (e.g., the prompt template plus the query) and the incorrect query response. In some implementations, the model distillation system 206 provides the correct query response in the factual reasoning prompt. In some instances, the model distillation system 206 omits the correct query response and can instruct the strong generative model 240 to determine the correct answer as part of determining how the weak generative model 230 arrived at the incorrect query response.

Act 404 includes providing the factual reasoning prompt to the strong generative model. In particular, the model distillation system 206 provides the factual reasoning prompt with the facts included or as separate LGM inputs to the strong generative model 240. In response, the strong generative model 240 processes the factual reasoning prompt, the facts, and determines the reason why the weak generative model 230 generated the incorrect query response based on the initial query prompt rather than the correct query response. As shown, act 406 includes the strong generative model 240 generating and returning a reason response to the factual reasoning prompt.

Act 408 includes the model distillation system 206 generating an induction prompt for the target concept that includes the factual reasoning prompt, the reason response, and induced content instructions. Upon receiving the reason response, the model distillation system 206 can provide a follow-up prompt to the strong generative model 240 for it to generate general concepts associated with the target concept that can transform the incorrect query response of the weak generative model 230 into the correct query response.

In various implementations, the induction prompt includes additional instructions to provide one or more pieces of induced content that the weak generative model 230 could use to correctly answer the query. Notably, the induction prompt directs the strong generative model 240 to provide general concepts for the target concept that are not overfitted to only the query but would assist the weak generative model 230 in answering other queries associated with the target concept.

In various implementations, the induction prompt also includes the factual reasoning prompt and the reason response. For example, the additional instructions direct the strong generative model 240 to use the reason response to generate the induced content. In some instances, the additional instructions direct the strong generative model 240 to provide the induced content in the form of key concepts, rules, and/or examples that may be provided to the weak generative model 230 in a prompt along with a query associated with the target concept.

Act 410 includes the model distillation system 206 providing the induction prompt to the strong generative model. As mentioned, the induction prompt may include the factual reasoning prompt and reason response or these items may be provided as separate LGM inputs. In response, the strong generative model 240 generates the induced content with key concepts, rules, and examples and returns the induced content to the model distillation system 206, as shown in act 412. In some implementations, the strong generative model 240 generates an induced content response that includes the induced content in a natural language (NL) format. In some instances, the induced content is formatted in another data structure (e.g., an XML, HTML, or JSON format).

As described, the factual reasoning prompt and the induction prompt are separate prompts and correspond to separate communications between the model distillation system 206 and the strong generative model 240. In some instances, isolating these sets of actions allows the strong generative model 240 to more accurately generate both the reason response and the induced content. In some implementations, the factual reasoning prompt and the induction prompt are combined into a single prompt and set of communications with the strong generative model 240.

While the series of acts 400 corresponds to generating induced content from one test case (e.g., one incorrectly answered query) for a target concept, in various implementations, the model distillation system 206 provides multiple incorrectly answered queries (and other corresponding facts) for the target concept to the strong generative model 240. In some instances, the strong generative model 240 may be able to generate more generalized induced content when based on multiple queries that the weak generative model 230 struggled to answer correctly for the target concept.

FIG. 4B illustrates an example block timing diagram of using a strong generative model to generate induced content to improve the weak generative model when processing prompts for the concept weakness according to some implementations. As shown, FIG. 4B shows actions that the model distillation system 206 performs as part of an induction phase 450. In particular, the example in FIG. 4B corresponds to a strong generative model (e.g., GPT-4.0) inducing key concepts, rules, and examples from a given task and dataset by prompting it to reason through the facts provided to the weak model.

FIG. 4B continues the Cypher query syntax example from FIG. 3B. In particular, the induction phase 450 corresponds to the model distillation system 206 using the incorrect query response (e.g., second output 366) for the NL2 (e.g., second query 356) to generate induced content for the target concept (e.g., generating Cypher query syntax).

As shown in FIG. 4B, the model distillation system 206 generates a factual reasoning prompt 458 (i.e., Prompt 1) that includes the second ground truth pair 452, which includes the second query and the second correct response (i.e., a. ground truth); the initial query prompt 454 provided to the weak generative model 230 (i.e., b. WM prompt); and the incorrect query response 456 generated by the weak model 330 (i.e., c. WM's wrong output). The factual reasoning prompt 458 also includes instructions to freely reason through the facts to determine why the weak model 330 generated the wrong answer for the second query.

In some implementations, the factual reasoning prompt 458 defines a persona of the strong model 440. For example, the factual reasoning prompt 458 includes the following: "You are an expert in generating and reasoning over natural language to Cypher queries translation ...." Additionally, as described above, the model distillation system 206 includes the accurate NL-Cypher pair (e.g., a. ground truth) that the weak model failed to predict correctly with the factual reasoning prompt 458. For example, the model distillation system. As also described, the factual reasoning prompt 458 includes the incorrect Cypher query syntax generated by the weak model 330 (e.g., c. WM's wrong output) and the prompt template and/or initial query prompt (e.g., b. WM prompt) that was sent to the weak model 330.

The model distillation system 206 provides the factual reasoning prompt 458 to the strong model 440. The model distillation system 206 requests that the strong model 440 analyze and identify the reasons behind the weak model's incorrect response based on the information and facts included in the factual reasoning prompt 458. In response, the strong model 440 generates and returns the reason response (i.e., SM Reasoning Response) to the model distillation system 206. For example, the strong model 440 reasons through the facts presented and tries to provide a sense of meaning into why the weak model is struggling with the input query. The induced content returned by the strong model 440 explains why the response of the weak model 330 is wrong, and/or what missing or incorrect information the weak model 330 should have used to correctly answer the second query.

FIG. 4B also shows the model distillation system 206 generating an induction prompt 462 (i.e., Prompt 2). As shown, the model distillation system 206 includes the factual reasoning prompt 458 (i.e., Prompt 1) and induction content instructions 464 in the induction prompt 462. As provided above, the induction prompt 462 directs the strong model 440 to induce one or more concepts, rules, and/or examples to guide the weak model 330 with explicit reasoning in such a way that it can answer all similar questions correctly.

The model distillation system 206 provides the induction prompt 462 to the strong model 440. In response, the strong model 440 induces concepts based on the presented facts and its reasoning over the cause of the weak model's inability to generate the correct response. Additionally, the strong model 440 returns induced content 466 (i.e., SM Output), which includes induced content of concepts, rules, and examples that the weak model 330 can use to correctly answer the second query.

As mentioned above, FIGS. 5A-5B describe the model distillation system 206 performing an induction phase. Specifically, FIG. 5A illustrates an example sequence diagram of using the strong generative model and the weak generative model to deduce and verify the induced content for the weak generative model according to some implementations, while FIG. 5B illustrates another block timing diagram with corresponding examples.

As shown, FIG. 5A includes a series of acts 500 performed by or with the model distillation system 206. In some implementations, the series of acts 500 may include fewer or different acts (e.g., some of the acts may be skipped or omitted). Additionally, in some instances, the acts in the series of acts 500 are performed in a different order.

Before distilling the induced content, the model distillation system 206 first verifies that the induced content broadly achieves correct responses to various queries provided to the weak generative model 230 for the target concept. To illustrate, act 502 involves the model distillation system 206 and the strong generative model 240 obtaining similar query examples for the target concept. As shown, the model distillation system 206 utilizes the strong model 440 to generate similar queries to the incorrectly answered query to use as test queries.

In some implementations, the model distillation system 206 obtains similar queries from the ground truth database or another query dataset. For example, if the original query was part of a group or set of queries for the target concept, the model distillation system 206 may obtain the similar queries from the set.

Act 504 includes the model distillation system 206 supplementing the prompt template for the weak generative model 230 with the induced content. For example, the model distillation system 206 adds the induced content (e.g., the key concepts, rules, and/or examples) to the prompt template to generate a supplemented prompt template. At this stage, the supplemented prompt template is temporary until the induced content can be verified or validated.

Act 506 includes the model distillation system 206 generating a test query prompt from a test query and the supplemented prompt template. In various implementations, the model distillation system 206 selects one of the similar queries as a test query. The model distillation system 206 then generates a test query prompt (e.g., similar to the initial query prompt described above) by adding the test query to the supplemented prompt template that includes the induced content. Act 508 shows the model distillation system 206 providing the test query prompt to the weak generative model 230.

Act 510 includes the weak generative model 230 generating a test query response to the test query and returning the test query response to the model distillation system 206. For example, the weak generative model 230 follows the instructions in the test query prompt along with the induced content to generate an answer to the test query, which is provided to the model distillation system 206.

As shown in FIG. 5A, the series of acts 500 splits into either Path A or Path B. Path A includes act 512, where the model distillation system 206 evaluates the test query response for correctness to determine an incorrect test query response. For instance, the model distillation system 206 determines that the test query response received from the weak generative model 230 does not match or correctly answer the test query using one or more approaches or techniques described above. For example, the model distillation system 206 determines that the query response is not a match or is beyond a response similarity threshold distance or amount.

Act 514 in Path A includes the model distillation system 206 returning to the induction phase to generate different induced content from the test query. For example, with a new incorrect query response from the weak generative model 230, the model distillation system 206 uses the strong generative model 240 to generate new, additional, and/or different induced content for the target concept, which the model distillation system 206 can again verify to see if it successfully improves the weak generative model's ability to correctly answer queries associated with the target concept.

Path B includes act 516 of the model distillation system 206 evaluating the test query response for correctness to verify the test query response. For instance, the model distillation system 206 determines that the test query response received from the weak generative model 230 matches and/or correctly answers the test query using one or more approaches or techniques described above.

In response, the model distillation system 206 generates a distilled concept from the verified induced concept, as shown in act 518 in Path B. For example, upon being verified as improving the weak generative model's ability to efficiently generate correct answers to queries across the target concept, the model distillation system 206 codifies the induced concept into a distilled concept. Furthermore, the model distillation system 206 incorporates or adds the distilled concept to the prompt template for the weak generative model 230, as shown in act 520 in Path B.

In various implementations, the model distillation system 206 may repeat the series of acts 500 for multiple test queries for the target concept before distilling the induced content. For example, the model distillation system 206 tests multiple and/or a range of test queries for the target concept to ensure that the induced content is not too narrow or overfit to the original query that the weak model got incorrect. In these implementations, the model distillation system 206 may determine whether to return to the induction phase or to distill the induced content based on a deduction threshold being satisfied (e.g., a threshold amount of test queries are answered correctly by the weak generative model 230). For example, the deduction threshold is satisfied when 4 out of 5 or at least 75% of the test queries are correctly answered.

In addition to performing test cases for one or more similar examples, in many implementations, the model distillation system 206 also runs a test case with the original query. Indeed, the model distillation system 206 ensures that the induced content empowers the weak generative model 230 to correctly answer the original query. Otherwise, if the weak model cannot answer the original query with the induced content, then the weak model is unlikely to solve similar queries (e.g., a broader scope of queries) for the target concept.

FIG. 5B illustrates an example block timing diagram of using the strong generative model and the weak generative model to deduce and verify the induced content for the weak generative model according to some implementations. As shown, FIG. 5B shows actions that the model distillation system 206 performs as part of a verification and deduction phase 550 (i.e., deduction from verification). In general, the verification and deduction phase 550 corresponds to the model distillation system 206 verifying the induced content generated by the strong model 440 and distilling the verified induced content into a prompt template for future prompts to the weak model 330 for the target concept.

FIG. 5B continues the Cypher query syntax example from FIG. 3B and FIG. 4B and includes both the weak model 330 (e.g., GPT-3.5) and the strong model 440 (e.g., GPT-4.0) introduced above. As shown, the model distillation system 206 begins with the model distillation system 206 prompting the strong model 440 to generate similar examples 554 of the test case 558 (e.g., the original query that resulted in the incorrectly predicted response) along with corresponding correct query responses. In this way, the model distillation system 206 generates additional queries that are valid and relevant for the task and the target concept.

Using the test case 558 and one or more of the similar examples 554, the model distillation system 206 generates test query prompts. For instance, the model distillation system 206 adds the test queries from the test case 558 and the similar examples 554 with the prompt template supplemented with the induced content (e.g., the model distillation system 206 incorporates the concepts derived from the induction phase into the prompt template) to generate a set of test query prompts. As shown, the model distillation system 206 generates a test prompt 560 that includes the test case 558, the original prompt template, and the induced concepts.

The model distillation system 206 provides the test prompt 560 and/or other test query prompts to the weak model 330, which generates test query responses. In response, the model distillation system 206 evaluates the responses for correctness. In this way, the model distillation system 206 re-evaluates the weak model 330 on both the original incorrectly predicted query and some or all of the newly generated similar examples. As shown, the model distillation system 206 performs a verification action 562 to determine whether the test case passed a correctness test.

If the test case passes, the model distillation system 206 accepts the induced content into distilled content 564. More specifically, if the weak model 330 is now able to deduce correct responses for some or all of the test queries based on the induced content, then the model distillation system 206 can accept the induced concepts as distilled concepts. If the test case does not pass, the model distillation system 206 returns to the induction phase 450, as described above. For example, the model distillation system 206 rejects the induced concepts and returns to the induction phase 450 to generate additional and/or different induced content from the strong model 440 until the weak model 330 passes a sufficient number of test cases.

As mentioned above, the model distillation system 206 may evaluate multiple test query responses to determine if the induced content satisfies a deduction threshold. For example, the model distillation system 206 may evaluate multiple test query responses before determining whether to return to the induction phase 450 or deduce the induced content into distilled content. Here, the goal is to verify whether the weak model's responses, now informed by the induced content in the test prompt, correctly align with the expected answers.

As shown in FIG. 5B, the distilled content 564 is incorporated or codified into the prompt to generate the supplemented template prompt 566 (e.g., an optimized prompt template) for the weak model 330. The supplemented template prompt 566 includes the key concepts, rules, and/or examples from the distilled content 564. In this way, future queries to the weak model 330 for the target concept will be accompanied by the distilled content 564, which will enable the weak model 330 to correctly answer the query without needing to be retrained or change its current, efficient operational processes. Indeed, the distilled content 564 may allow the weak model 330 to leverage the implicit learning of weights and biases for the target concept through the incorporation of induced concepts (now accepted as distilled) from the strong model 440.

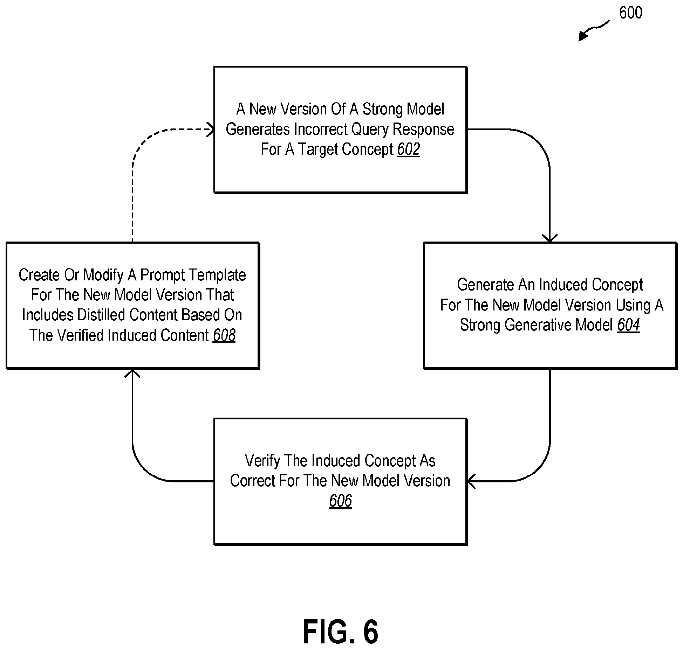

While the disclosure focuses on improving weak models by leveraging strong models to generate induced concepts that cover vulnerabilities of the weak models for target concepts, the model distillation system 206 can additionally use similar techniques and approaches to efficiently adapt prompts for strong models. To illustrate, FIG. 6 illustrates an example of adapting strong model prompts with distilled concepts to improve versions of strong models according to some implementations. As shown, FIG. 6 includes a series of acts 600 performed by or with the model distillation system 206.

As additional context, a significant challenge in using LGMs is transitioning to newer models and newer model versions. For instance, the recently released GPT-4-Turbo, an upgraded version of GPT-4, includes many unexpected issues. For example, a query prompt that resulted in correct answers with GPT-4 yields incorrect answers with GPT-4-Turbo. This may occur because strong models are so large, complex, and broad in scope that updating some areas of the model may have unintended consequences on other areas of the model. Once an issue is identified, retraining the updated version of the strong model can take weeks or months before the issue is resolved. This is compounded when various issues for different target concepts are identified in the new version of the strong model.

Accordingly, the model distillation system 206 may use concept distillation within prompts to the new version to correct shortcomings of the model using a similar approach as described above. As shown, the series of acts includes act 602, which includes a new version of a strong model generating incorrect query responses for a target concept.

Act 604 includes generating an induced concept for the new model version using a strong generative model. For example, the model distillation system 206 utilizes a version of the strong model that yields correct responses for the target concept to generate induced concepts for the new model version using the approaches and techniques described above (e.g., by performing the initialization and the induction phases).

Act 606 includes verifying the induced concept as correct for the new model version. For example, the model distillation system 206 performs a series of tests to confirm that the induced content correctly addresses the shortcomings of the new version of the strong model. If the induced content is correct, the model distillation system 206 can accept the induced content as distilled content using the approaches and techniques described above.

Act 608 includes creating or modifying a prompt template for the new model version that includes distilled content based on the verified induced content. For example, the model distillation system 206 creates a new prompt template for the new model version or modifies an existing prompt template to include the distilled content for the target concept. In some cases, the prompt templates supplemented with the distilled content may be used when querying the new version of the strong model for the target concept.

As shown in FIG. 6, the series of acts 600 can repeat for each target concept where the new strong model version falls short. This allows the model distillation system 206 to quickly, flexibly, and efficiently patch vulnerabilities in the new version of the strong model while these vulnerabilities are being fixed or a newer version of the strong model is being generated to address these issues. Indeed, the model distillation system 206 enables rapid, efficient, and flexible updates in response to new AI model releases (which occur frequently in our current dynamic technological landscape) and reduces the computational time and resources needed for model adjustments with each update.

Additionally, the approaches and techniques described in this disclosure document can be further supplemented with current prompt engineering deductive reasoning techniques to further improve the performance of LGMs. For instance, techniques such as chain-of-thought prompting, least-to-most prompting, and tree-of-thought prompting can be incorporated into the prompt-based concept distillation process to enhance and strengthen these existing techniques.

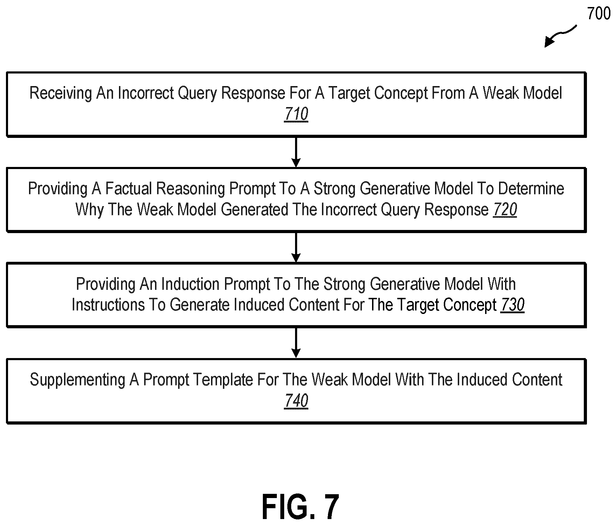

Turning now to FIG. 7, this figure illustrates an example series of acts of a computer-implemented method for providing one or more induced and/or distilled concepts to one or more weak generative models according to some implementations. While FIG. 7 illustrates acts according to one or more implementations, alternative implementations may omit, add to, reorder, and/or modify any of the acts shown.

The acts in FIG. 7 can be performed as part of a method (e.g., a computer-implemented method). Alternatively, a computer-readable medium can include instructions that, when executed by a processing system with a processor, cause a computing device to perform the acts in FIG. 7. In some implementations, a system (e.g., a processing system comprising a processor) can perform the acts in FIG. 7. For example, the system includes a processing system and a computer memory including instructions that, when executed by the processing system, cause the system to perform various actions or steps.

As shown, the series of acts 700 includes act 710 of receiving an incorrect query response for a target concept from a weak model. For instance, in example implementations, act 710 involves receiving an incorrect query response to the query in response to providing an initial query prompt with a query for a target concept to a weak generative model.

In some implementations, act 710 includes identifying the target concept as a weakness for the weak generative model and obtaining a ground truth dataset associated with the target concept. In some instances, the ground truth dataset stores queries and corresponding correct query responses, including the query and the correct query response. In some implementations, receiving the incorrect query response to the query includes receiving a response to the query from the weak generative model, comparing the response to the correct query response to determine the incorrect query response as an incorrect query response, and associating the initial query prompt and the incorrect query response with the query and the correct query response.

In some implementations, act 710 includes receiving an additional response in response to providing an additional initial query prompt with an additional query for an additional task to the weak generative model, comparing the additional response to an additional correct answer associated with the additional query for the additional task to determine the additional response as a correctly answered response to the additional query, and storing an indication that the weak generative model correctly answered the additional query for the additional task. In some implementations, act 710 includes generating the initial query prompt from the prompt template by adding the query for the target concept to the prompt template and providing the initial query prompt with the query for the target concept to the weak generative model. In some instances, the prompt template includes instructions for the strong generative model to solve the query

In some implementations, the operations further include determining that a query response received from the weak generative model is the incorrect query response to the query based on the query response not matching the correct query response to the query. In some instances, the operations further include determining that a query response received from the weak generative model is the incorrect query response to the query based on the query response and the correct query response to the query not satisfying a similarity threshold.

As further shown, the series of acts 700 includes act 720 of providing a factual reasoning prompt to a strong generative model to determine why the weak model generated the incorrect query response. For instance, in example implementations, act 720 involves providing a factual reasoning prompt to a strong generative model where the factual reasoning prompt includes the incorrect query response, a correct query response to the query, and instructions to provide a reason response indicating why the weak generative model generated the incorrect query response.

In some implementations, act 720 includes providing the distilled content for the target concept to the weak generative model via a query prompt, which causes features of the strong generative model to be implicitly transferred to the weak generative model without training the weak generative model. In some implementations, the weak generative model includes an order of magnitude fewer parameters than the strong generative model, and/or the weak generative model is computationally simpler than the strong generative model for the same query prompt.

In some implementations, act 720 includes generating the factual reasoning prompt by combining inputs including the initial query prompt provided to the weak generative model, the incorrect query response from the weak generative model, the correct query response to the query from a ground truth dataset, and the instructions to provide the reason response indicating why the weak generative model generated the incorrect query response. In some instances, the instructions to provide the reason response include directions for the strong generative model to analyze facts provided in the inputs and determine the reason response indicating why the weak generative model generated the incorrect query response.

As further shown, the series of acts 700 includes act 730 of providing an induction prompt to the strong generative model with instructions to generate induced content for the target concept. For instance, in example implementations, act 730 involves providing an induction prompt to the strong generative model, where the induction prompt includes the factual reasoning prompt, the reason response, and additional instructions to generate induced content for the target concept.

In some implementations, act 730 includes receiving the induced content from the strong generative model in response to providing the induction prompt. In some instances, the induced content includes the rules and the concepts generated from the strong generative model to correctly answer user queries associated with the target concept. In some instances, the additional instructions to generate the induced content for the target concept include directions to identify rules and examples that the weak generative model should have used to correctly solve the query based on the reason response.

As shown further, the series of acts 700 includes act 740 of supplementing a prompt template for the weak model with the induced content. For instance, in example implementations, act 740 involves supplementing a prompt template for providing queries to the weak generative model with the induced content. In some instances, act 740 includes supplementing the prompt template with the distilled content for the target concept generated from the verified induced content. In some instances, act 740 includes replacing the supplementing the induced content in the prompt template with the distilled content and/or codifying the induced content in the prompt template into distilled content. In some implementations, the induced content includes rules, concepts, or examples corresponding to the target concept.

In some implementations, act 740 includes verifying that adding the induced content to the initial query prompt with the query causes the weak generative model to generate the correct query response to the query, and/or generating distilled content from the induced content codifying verified induced content into the distilled content based on the weak generative model generating the correct query response to the query. In one or more implementations, supplementing the prompt template includes supplementing the prompt template with the distilled content for the target concept generated from the verified induced content. In some instances, act 740 includes supplementing a prompt template for providing queries to the weak generative model with distilled content for the target concept that includes the induced content.

In some implementations, act 740 includes generating, using the strong generative model, a set of test queries that includes one or more queries similar to the query for the target concept and one or more corresponding correct test responses and generating a test verification prompt by adding a test query from the set of test queries to the prompt template supplemented with the induced content. In some implementations, act 740 includes providing the test verification prompt to the weak generative model to generate a test query response, determining that the test query response is correct by or based on comparing the test query response to a correct test response corresponding to the test query, and generating the distilled content for the target concept from the induced content by codifying the induced content into the distilled content based on the test query response being correct.

In some implementations, act 740 includes receiving a new query associated with the target concept from a client device, generating a new query prompt by combining the new query with the prompt template supplemented with the induced content and/or distilled content, and receiving a new response from the strong generative model in response to providing the new query prompt to the strong generative model.

FIG. 8 illustrates certain components that may be included within a computer system 800. The computer system 800 may be used to implement the various computing devices, components, and systems described herein (e.g., by performing computer-implemented instructions). As used herein, a "computing device" refers to electronic components that perform a set of operations based on a set of programmed instructions. Computing devices include groups of electronic components, client devices, server devices, etc.

In various implementations, the computer system 800 represents one or more of the client devices, server devices, or other computing devices described above. For example, the computer system 800 may refer to various types of network devices capable of accessing data on a network, a cloud computing system, or another system. For instance, a client device may refer to a mobile device such as a mobile telephone, a smartphone, a personal digital assistant (PDA), a tablet, a laptop, or a wearable computing device (e.g., a headset or smartwatch). A client device may also refer to a non-mobile device such as a desktop computer, a server node (e.g., from another cloud computing system), or another non-portable device.

The computer system 800 includes a processing system including a processor 801. The processor 801 may be a general-purpose single- or multi-chip microprocessor (e.g., an Advanced Reduced Instruction Set Computer (RISC) Machine (ARM)), a special-purpose microprocessor (e.g., a digital signal processor (DSP)), a microcontroller, a programmable gate array, etc. The processor 801 may be referred to as a central processing unit (CPU) and may cause computer-implemented instructions to be performed. Although the processor 801 shown is just a single processor in the computer system 800 of FIG. 8, in an alternative configuration, a combination of processors (e.g., an ARM and DSP) could be used.

The computer system 800 also includes memory 803 in electronic communication with the processor 801. The memory 803 may be any electronic component capable of storing electronic information. For example, the memory 803 may be embodied as random-access memory (RAM), read-only memory (ROM), magnetic disk storage media, optical storage media, flash memory devices in RAM, on-board memory included with the processor, erasable programmable read-only memory (EPROM), electrically erasable programmable read-only memory (EEPROM), registers, and so forth, including combinations thereof.

The instructions 805 and the data 807 may be stored in the memory 803. The instructions 805 may be executable by the processor 801 to implement some or all of the functionality disclosed herein. Executing the instructions 805 may involve the use of the data 807 that is stored in the memory 803. Any of the various examples of modules and components described herein may be implemented, partially or wholly, as instructions 805 stored in memory 803 and executed by the processor 801. Any of the various examples of data described herein may be among the data 807 that is stored in memory 803 and used during the execution of the instructions 805 by the processor 801.

A computer system 800 may also include one or more communication interface(s) 809 for communicating with other electronic devices. The one or more communication interface(s) 809 may be based on wired communication technology, wireless communication technology, or both. Some examples of the one or more communication interface(s) 809 include a Universal Serial Bus (USB), an Ethernet adapter, a wireless adapter that operates according to an Institute of Electrical and Electronics Engineers (IEEE) 802.11 wireless communication protocol, a Bluetooth^{®} wireless communication adapter, and an infrared (IR) communication port.

A computer system 800 may also include one or more input device(s) 811 and one or more output device(s) 813. Some examples of the one or more input device(s) 811 include a keyboard, mouse, microphone, remote control device, button, joystick, trackball, touchpad, and light pen. Some examples of the one or more output device(s) 813 include a speaker and a printer. A specific type of output device that is typically included in a computer system 800 is a display device 815. The display device 815 used with implementations disclosed herein may utilize any suitable image projection technology, such as liquid crystal display (LCD), light-emitting diode (LED), gas plasma, electroluminescence, or the like. A display controller 817 may also be provided, for converting data 807 stored in the memory 803 into text, graphics, and/or moving images (as appropriate) shown on the display device 815.

The various components of the computer system 800 may be coupled together by one or more buses, which may include a power bus, a control signal bus, a status signal bus, a data bus, etc. For clarity, the various buses are illustrated in FIG. 8 as a bus system 819.

In an aspect, there is provided a computer-implemented method for providing one or more induced concepts to one or more weak generative models, comprising: in response to providing an initial query prompt with a query (112) for a target concept to a weak generative model (116), receiving an incorrect query response (118) to the query (112); providing a factual reasoning prompt (120) to a strong generative model (122) where the factual reasoning prompt (120) includes the incorrect query response (118), a correct query response (126) to the query (112), and instructions to provide a reason response indicating why the weak generative model (116) generated the incorrect query response (118); providing an induction prompt to the strong generative model (122), where the induction prompt includes the factual reasoning prompt (120), the reason response, and additional instructions to generate induced content (124) for the target concept, wherein the induced content (124) includes rules, concepts, or examples corresponding to the target concept; and supplementing a prompt template (114) for providing queries to the weak generative model (116) with the induced content (124).

In an example, providing the induced content for the target concept to the weak generative model via a query prompt causes features of the strong generative model to be implicitly transferred to the weak generative model without training the weak generative model.

In an example, verifying that adding the induced content to the initial query prompt with the query causes the weak generative model to generate the correct query response to the query; and based on the weak generative model generating the correct query response to the query, generating distilled content from the induced content by codifying verified induced content into the distilled content, wherein supplementing the prompt template includes supplementing the prompt template with the distilled content for the target concept generated from the verified induced content.

In an example, generating the initial query prompt from the prompt template by adding the query for the target concept to the prompt template, wherein the prompt template includes instructions for the strong generative model to solve the query; and providing the initial query prompt with the query for the target concept to the weak generative model.

In an example, the method comprises identifying the target concept as a weakness for the weak generative model; and obtaining a ground truth dataset associated with the target concept, wherein the ground truth dataset stores queries and corresponding correct query responses, including the query and the correct query response.In an example, receiving the incorrect query response to the query includes: receiving a response to the query from the weak generative model; comparing the response to the correct query response to determine the incorrect query response as an incorrect query response; and associating the initial query prompt and the incorrect query response with the query and the correct query response.

In an example, the method comprises in response to providing an additional initial query prompt with an additional query for an additional task to the weak generative model, receiving an additional response; comparing the additional response to an additional correct answer associated with the additional query for the additional task to determine the additional response as a correctly answered response to the additional query; and storing an indication that the weak generative model correctly answered the additional query for the additional task.

In an example, the method comprises generating the factual reasoning prompt by combining inputs including the initial query prompt provided to the weak generative model, the incorrect query response from the weak generative model, the correct query response to the query from a ground truth dataset, and the instructions to provide the reason response indicating why the weak generative model generated the incorrect query response.

In an example, the instructions to provide the reason response include directions for the strong generative model to analyze facts provided in the inputs and determine the reason response indicating why the weak generative model generated the incorrect query response.

In an example, in the method, the weak generative model includes an order of magnitude fewer parameters than the strong generative model; and the weak generative model is computationally simpler than the strong generative model for a same query prompt.

In an example, the method further comprises receiving the induced content from the strong generative model in response to providing the induction prompt, wherein the induced content includes the rules and the concepts generated from the strong generative model to correctly answer user queries associated with the target concept.

In an example, the additional instructions to generate the induced content for the target concept include directions to identify rules and examples that the weak generative model should have used to correctly solve the query based on the reason response.

In an example, the method further comprises generating, using the strong generative model, a set of test queries that includes one or more queries similar to the query for the target concept and one or more corresponding correct test responses; and generating a test verification prompt by adding a test query from the set of test queries to the prompt template supplemented with the induced content.

In an example, the method further comprises providing the test verification prompt to the weak generative model to generate a test query response; determining that the test query response is correct based on comparing the test query response to a correct test response corresponding to the test query; and generating distilled content for the target concept from the induced content based on the test query response being correct.

In an example, the method further comprises receiving a new query associated with the target concept from a client device; generating a new query prompt by combining the new query with the prompt template supplemented with the induced content; and receiving a new response from the strong generative model in response to providing the new query prompt to the strong generative model.

In an aspect, there is provided a system comprising: a processing system; and a computer memory (803) comprising instructions (805) that, when executed by the processing system, cause the system to perform operations of: in response to providing an initial query prompt with a query (112) for a target concept to a weak generative model (116), receiving an incorrect query response (118) to the query (112); providing a factual reasoning prompt (120) to a strong generative model (122) where the factual reasoning prompt (120) includes the incorrect query response (118), a correct query response (126) to the query (112), and instructions to provide a reason response indicating why the weak generative model (116) generated the incorrect query response (118); providing an induction prompt to the strong generative model (122), where the induction prompt includes the factual reasoning prompt (120), the reason response, and additional instructions to generate an induced content (124) for the target concept, wherein the induced content (124) includes rules, concepts, or examples corresponding to the target concept; and supplementing a prompt template (114) for providing queries to the weak generative model (116) with the induced content (124).

In an example, the operations further include determining that a query response received from the weak generative model is the incorrect query response to the query based on the query response not matching the correct query response to the query.

In an example, the operations further include determining that a query response received from the weak generative model is the incorrect query response to the query based on the query response and the correct query response to the query not satisfying a similarity threshold.

In an aspect, there is provided a computer-implemented method for providing one or more induced concepts to one or more weak generative models, comprising: in response to providing an initial query prompt with a query (112) for a target concept to a weak generative model (116), receiving an incorrect query response (118) to the query (112); providing a factual reasoning prompt (120) to a strong generative model (122) where the factual reasoning prompt (120) includes the incorrect query response (118), a correct query response (126) to the query (112), and instructions to provide a reason response indicating why the weak generative model (116) generated the incorrect query response (118); providing an induction prompt to the strong generative model (122), where the induction prompt includes the factual reasoning prompt (120), the reason response, and additional instructions to generate an induced content (124) for the target concept, wherein the induced content (124) includes rules, concepts, or examples corresponding to the target concept; verifying that adding the induced content (124) to the initial query prompt with the query (112) causes the weak generative model (116) to generate the correct query response (126) to the query (112); and supplementing a prompt template (114) for providing queries to the weak generative model (116) with the induced content (124).

In an example, the method further comprises generating the factual reasoning prompt by combining inputs including the initial query prompt provided to the weak generative model, the incorrect query response from the weak generative model, the correct query response to the query from a ground truth dataset, and the instructions to provide the reason response indicating why the weak generative model generated the incorrect query response.

This disclosure describes a subjective data application system in the framework of a network. In this disclosure, a "network" refers to one or more data links that enable electronic data transport between computer systems, modules, and other electronic devices. A network may include public networks such as the Internet as well as private networks. When information is transferred or provided over a network or another communication connection (either hardwired, wireless, or both), the computer correctly views the connection as a transmission medium. Transmission media can include a network and/or data links that carry required program code in the form of computer-executable instructions or data structures, which can be accessed by a general-purpose or special-purpose computer. Combinations of the above are also included within the scope of computer-readable media.

In addition, the network described herein may represent a network or a combination of networks (such as the Internet, a corporate intranet, a virtual private network (VPN), a local area network (LAN), a wireless local area network (WLAN), a cellular network, a wide area network (WAN), a metropolitan area network (MAN), or a combination of two or more such networks) over which one or more computing devices may access the various systems described in this disclosure. Indeed, the networks described herein may include one or multiple networks that use one or more communication platforms or technologies for transmitting data. For example, a network may include the Internet or other data link that enables transporting electronic data between respective client devices and components (e.g., server devices and/or virtual machines thereon) of the cloud computing system.

Further, upon reaching various computer system components, program code means in the form of computer-executable instructions or data structures can be transferred automatically from transmission media to non-transitory computer-readable storage media (devices), or vice versa. For example, computer-executable instructions or data structures received over a network or data link can be buffered in random-access memory (RAM) within a network interface module (NIC), and then it is eventually transferred to computer system RAM and/or to less volatile computer storage media (devices) at a computer system. Thus, it should be understood that computer-readable storage media (devices) can be included in computer system components that also (or even primarily) utilize transmission media.

Computer-executable instructions include instructions and data that, when executed by a processor, cause a general-purpose computer, special-purpose computer, or special-purpose processing device to perform a certain function or group of functions. In some implementations, computer-executable and/or computer-implemented instructions are executed by a general-purpose computer to turn the general-purpose computer into a special-purpose computer implementing elements of the disclosure. The computer-executable instructions may include, for example, binaries, intermediate format instructions such as assembly language, or even source code. Although the subject matter has been described in language specific to structural features and/or methodological acts, it is to be understood that the subject matter defined in the appended claims is not necessarily limited to the features or acts described above. Rather, the described features and acts are disclosed as example forms of implementing the claims.

Those skilled in the art will appreciate that the disclosure may be practiced in network computing environments with many types of computer system configurations, including, personal computers, desktop computers, laptop computers, message processors, hand-held devices, multi-processor systems, microprocessor-based or programmable consumer electronics, network PCs, minicomputers, mainframe computers, mobile telephones, PDAs, tablets, pagers, routers, switches, and the like. The disclosure may also be practiced in distributed system environments where local and remote computer systems, which are linked (either by hardwired data links, wireless data links, or a combination of hardwired and wireless data links) through a network, both perform tasks. In a distributed system environment, program modules may be located in both local and remote memory storage devices.

The techniques described herein may be implemented in hardware, software, firmware, or any combination thereof unless specifically described as being implemented in a specific manner. Any features described as modules, components, or the like may also be implemented together in an integrated logic device or separately as discrete but interoperable logic devices. If implemented in software, the techniques may be realized at least in part by a non-transitory processor-readable storage medium, including instructions that, when executed by at least one processor, perform one or more of the methods described herein (including computer-implemented methods). The instructions may be organized into routines, programs, objects, components, data structures, etc., which may perform particular tasks and/or implement particular data types, and which may be combined or distributed as desired in various implementations.

Computer-readable media can be any available media that can be accessed by a general-purpose or special-purpose computer system. Computer-readable media that store computer-executable instructions are non-transitory computer-readable storage media (devices). Computer-readable media that carry computer-executable instructions are transmission media. Thus, by way of example, implementations of the disclosure can include at least two distinctly different kinds of computer-readable media: non-transitory computer-readable storage media (devices) and transmission media.

As used herein, computer-readable storage media (devices) may include RAM, ROM, EEPROM, CD-ROM, solid-state drives (SSDs) (e.g., based on RAM), Flash memory, phase-change memory (PCM), other types of memory, other optical disk storage, magnetic disk storage or other magnetic storage devices, or any other medium which can be used to store desired program code means in the form of computer-executable instructions or data structures and which can be accessed by a general-purpose or special-purpose computer.

The steps and/or actions of the methods described herein may be interchanged with one another without departing from the scope of the claims. In other words, unless a specific order of steps or actions is required for the proper operation of the method that is being described, the order and/or use of specific steps and/or actions may be modified without departing from the scope of the claims.

The term "determining" encompasses a wide variety of actions and, therefore, "determining" can include calculating, computing, processing, deriving, investigating, looking up (e.g., looking up in a table, a data repository, or another data structure), ascertaining, and the like. Also, "determining" can include receiving (e.g., receiving information), accessing (e.g., accessing data in a memory), and the like. Also, "determining" can include resolving, selecting, choosing, establishing, and the like.

The terms "comprising," "including," and "having" are intended to be inclusive and mean that there may be additional elements other than the listed elements. Additionally, it should be understood that references to "one implementation" or "implementations" of the present disclosure are not intended to be interpreted as excluding the existence of additional implementations that also incorporate the recited features. For example, any element or feature described concerning an implementation herein may be combinable with any element or feature of any other implementation described herein, where compatible.

The present disclosure may be embodied in other specific forms without departing from its spirit or characteristics. The described implementations are to be considered illustrative and not restrictive. The scope of the disclosure is indicated by the appended claims rather than by the foregoing description. Changes that come within the meaning and range of equivalency of the claims are to be embraced within their scope.

## Claims

1. A computer-implemented method for providing one or more induced concepts to one or more weak generative models, comprising:
in response to providing an initial query prompt with a query (112) for a target concept to a weak generative model (116), receiving an incorrect query response (118) to the query (112);
providing a factual reasoning prompt (120) to a strong generative model (122) where the factual reasoning prompt (120) includes the incorrect query response (118), a correct query response (126) to the query (112), and instructions to provide a reason response indicating why the weak generative model (116) generated the incorrect query response (118);
providing an induction prompt to the strong generative model (122), where the induction prompt includes the factual reasoning prompt (120), the reason response, and additional instructions to generate induced content (124) for the target concept, wherein the induced content (124) includes rules, concepts, or examples corresponding to the target concept; and
supplementing a prompt template (114) for providing queries to the weak generative model (116) with the induced content (124).

2. The computer-implemented method of claim 1, wherein providing the induced content for the target concept to the weak generative model via a query prompt causes features of the strong generative model to be implicitly transferred to the weak generative model without training the weak generative model.

3. The computer-implemented method of claim 1 or 2, further comprising:
verifying that adding the induced content to the initial query prompt with the query causes the weak generative model to generate the correct query response to the query; and
based on the weak generative model generating the correct query response to the query, generating distilled content from the induced content by codifying verified induced content into the distilled content, wherein supplementing the prompt template includes supplementing the prompt template with the distilled content for the target concept generated from the verified induced content.

4. The computer-implemented method of any of claims 1-3, further comprising:
generating the initial query prompt from the prompt template by adding the query for the target concept to the prompt template, wherein the prompt template includes instructions for the strong generative model to solve the query; and
providing the initial query prompt with the query for the target concept to the weak generative model.

5. The computer-implemented method of any of claims 1-4, further comprising:
identifying the target concept as a weakness for the weak generative model; and
obtaining a ground truth dataset associated with the target concept, wherein the ground truth dataset stores queries and corresponding correct query responses, including the query and the correct query response.

6. The computer-implemented method of claim 5, wherein receiving the incorrect query response to the query includes:
receiving a response to the query from the weak generative model;
comparing the response to the correct query response to determine the incorrect query response as an incorrect query response; and
associating the initial query prompt and the incorrect query response with the query and the correct query response.

7. The computer-implemented method of claim 5, further comprising:
in response to providing an additional initial query prompt with an additional query for an additional task to the weak generative model, receiving an additional response;
comparing the additional response to an additional correct answer associated with the additional query for the additional task to determine the additional response as a correctly answered response to the additional query; and
storing an indication that the weak generative model correctly answered the additional query for the additional task.

8. The computer-implemented method of any of claims 1-7, further comprising generating the factual reasoning prompt by combining inputs including the initial query prompt provided to the weak generative model, the incorrect query response from the weak generative model, the correct query response to the query from a ground truth dataset, and the instructions to provide the reason response indicating why the weak generative model generated the incorrect query response.

9. The computer-implemented method of claim 8, wherein the instructions to provide the reason response include directions for the strong generative model to analyze facts provided in the inputs and determine the reason response indicating why the weak generative model generated the incorrect query response.

10. The computer-implemented method of any of claims 1-9, wherein:
the weak generative model includes an order of magnitude fewer parameters than the strong generative model; and
the weak generative model is computationally simpler than the strong generative model for a same query prompt.

11. The computer-implemented method of any of claims 1-10, further comprising receiving the induced content from the strong generative model in response to providing the induction prompt, wherein the induced content includes the rules and the concepts generated from the strong generative model to correctly answer user queries associated with the target concept.

12. The computer-implemented method of any of claims 1-11, wherein the additional instructions to generate the induced content for the target concept include directions to identify rules and examples that the weak generative model should have used to correctly solve the query based on the reason response.

13. The computer-implemented method of any of claims 1-12, further comprising:
generating, using the strong generative model, a set of test queries that includes one or more queries similar to the query for the target concept and one or more corresponding correct test responses; and
generating a test verification prompt by adding a test query from the set of test queries to the prompt template supplemented with the induced content.

14. The computer-implemented method of claim 13, further comprising:
providing the test verification prompt to the weak generative model to generate a test query response;
determining that the test query response is correct based on comparing the test query response to a correct test response corresponding to the test query; and
generating distilled content for the target concept from the induced content based on the test query response being correct.

15. A system comprising:
a processing system; and
a computer memory (803) comprising instructions (805) that, when executed by the processing system, cause the system to perform operations of any of the preceding claims.
